Europäisches Patentamt

European Patent Office

Office européen des brevets

(19)

(11) Numéro de publication: **0 222 124**
**B1**

(12) **FASCICULE DE BREVET EUROPEEN**

(45) Date de publication du fascicule du brevet: 23.05.90

(51) Int. Cl.⁵: **A 23 F 5/04,** A 23 N 12/10

(21) Numéro de dépôt: 86113328.8

(22) Date de dépôt: 27.09.86

(54) **Procédé et dispositif pour régler le degré de torréfaction notamment du café.**

(30) Priorité: 21.10.85 CH 4527/85

(43) Date de publication de la demande:
20.05.87 Bulletin 87/21

(45) Mention de la délivrance du brevet:
23.05.90 Bulletin 90/21

(84) Etats contractants désignés:
AT BE CH DE FR IT LI LU NL SE

(56) Documents cités:
CA-A-1 061 867
FR-A-1 223 489
GB-A- 609 192
US-A-4 326 114

(73) Titulaire: SOCIETE DES PRODUITS NESTLE S.A.
Case postale 353
CH-1800 Vevey (CH)

(72) Inventeur: Le Viet, Toai
Sentier de Clies
CH-1800 Vevey (CH)
Inventeur: Truchement, Bernard
4, route de Sichoz
CH-1814 La Tour-De-Peilz (CH)

Courier Press, Leamington Spa, England.

# EP 0 222 124 B1

## Description

L'invention concerne un procédé pour régler le degré de torréfaction notamment du café, dans lequel on soumet ledit café à une torréfaction rapide micro-ondes et à un refroidissement brusque avec de l'eau et de l'air. L'invention concerne en outre le dispositif pour la mise en oeuvre de ce procédé.

La torréfaction du café par énergie micro-ondes est connue. Le brevet US 4 326 114 concerne un dispositif de torréfaction par micro-ondes comportant un tube incliné dans lequel on charge les grains de café, des sources micro-ondes réparties le long du tube, une chambre avec une dernière source micro-ondes pour contrôler et compléter la torréfaction et une chambre de refroidissement munie d'ajutages. Dans ce dispositif, pour augmenter le degré de torréfaction des grains de café, on augmente l'énergie de la dernière source micro-ondes. Une autre solution envisageable serait de diminuer le débit d'arrivée des grains de café. La première solution implique une augmentation dans la consommation d'énergie et la seconde une diminution de la productivité.

Le but de la présente invention est de disposer d'un procédé de torréfaction permettant d'agir avec une grande souplesse sur le degré de torréfaction des grains de café sans modifier le débit d'arrivée des grains de café et sans modifier l'énergie de la source micro-ondes utilisée pour ladite torréfaction. Ce procédé est également envisageable pour la torréfaction des fèves de cacao et le grillage des amandes, des noisettes, des cacahuètes et analogues.

La présente invention concerne un procédé pour régler le degré de torréfaction notamment du café, dans lequel, entre la torréfaction rapide et le refroidissement brusque, on laisse les grains de café séjourner dans une atmosphère exempte de source d'énergie pendant une durée de rétention déterminée en fonction du degré de torréfaction final désiré. On dispose ainsi d'un procédé dans lequel on torréfie par micro-ondes les grains de café et on peut faire varier rapidement le degré de torréfaction final en retenant plus ou moins longtemps les grains de café avant le refroidissement final, mettant ainsi à profit pour parachever la torréfaction l'énergie rémanente dans les grains de café. Avec une énergie micro-ondes, cette énergie rémanente est distribuée uniformément dans tout le volume du grain de café, évitant ainsi le défaut de la torréfaction rapide conventionnelle, à savoir le grillage du grain de café à partir de son enveloppe extérieure.

Ce système permet de faire varier très facilement l'équilibre du produit final selon que l'on souhaite se rapprocher de celui obtenu par la torréfaction rapide ou que l'on préfère se rapprocher de celui de la torréfaction classique.

Dans le cas où procédé selon l'invention est mis en oeuvre pour le café, la durée de rétention est comprise entre 0,1 et 5 minutes, la durée de torréfaction entre 0,2 et 3 minutes et la température de torréfaction entre 200 et 240°C.

Outre le café, on peut également envisager de torréfier selon l'invention des fèves de cacao, auquel cas la température de torréfaction sera de l'ordre de 140°C, les durées de rétention et de torréfaction restant sensiblement les mêmes. Les noisettes et les amandes peuvent également se prêter à un grillage selon l'invention. Dans ce cas, la température de grillage est de l'ordre de 110°C.

L'invention concerne en outre le dispositif pour la mise en oeuvre du procédé décrit di-dessus, comportant un tube cylindrique horizontal logé dans un applicateur micro-ondes et une zone de refroidissement brusque des grains de café, ledit dispositif comprenant au bout du tube cylindrique horizontal une trémie de réception et de rétention des grains de café avec un système de régulation de débit vers la zone de refroidissement brusque et un moyen pour régler et contrôler le temps de rétention des grains de café torréfiés, ledit moyen étant relié au système de régulation de débit.

Le dispositif fonctionne sensiblement de la manière suivante: les grains de café sont amenés par une trémie d'alimentation dans le tube cylindrique horizontal, monté à rotation autour de son axe. Cette rotation permet le transport des grains de café qui sont amenés progressivement à la température de torréfaction, à savoir de l'ordre de 200 à 240°C. L'applicateur micro-ondes comporte au moins une source micro-ondes, de préférence entre 2 et 4. Arrivés au bout du cylindre de torréfaction, les grains de café tombent dans le trémie de rétention comportant un système de régulation de débit constitué par un moteur entraînant une vis hélicoïdale. Ce système de régulation est relié à un moyen pour régler et contrôler le temps de rétention, qui est constitué par une sonde de température et une sonde de niveau, lesdites sondes étant disposées à différents niveaux dans la trémie de rétention. Selon une variante, le moyen pour régler et contrôler le temps de rétention est constitué par une balance doseuse, supportant la trémie de rétention. On affiche alors sur la balance, le poids de café à retenir dans la trémie de rétention, de sorte que le système de régulation de débit transporte les grains de café en maintenant constant le poids de café retenu dans la trémie précitée.

A la sortie dy système de rétention, les grains de café sont finalement refroidis brusquement et amenés aux postes de conditionnement. On prend selon l'invention un temps de rétention des grains de café selon le degré de torréfaction final désiré: plus le temps de rétention est élevé, plus le degré de torréfaction est élevé.

La suite de la description est faite en référence aux dessins sur lesquels:
Fig. 1 est une vue en perspective du dispositif selon l'invention et
Fig. 2 est une coupe transversale dans la trémie de rétention.

Le dispositif est placé sur un bâti (1), et comprend une trémie d'alimentation (2), un applicateur micro-ondes (3), un système de rétention (4) et une système de refroidissement brusque (5).

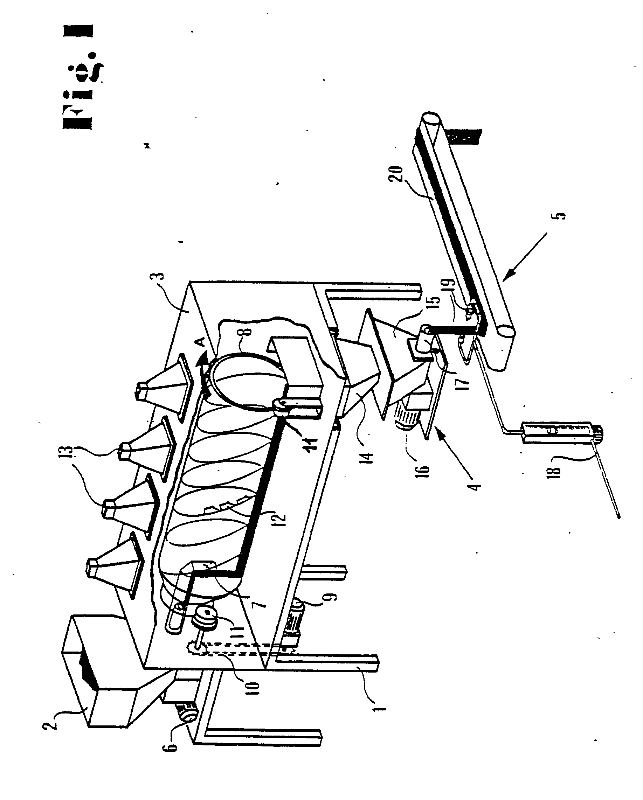

La trémie d'alimentation (2) comporte un moteur (6) et une vis sans fin (non représentée) pour le transport de grains. Les grains arrivent ainsi par le canal (7) dans le tube horizontal de torréfaction (8). Les grains de café sont représentés sur la Fig. 1 par une trace noire. Le tube de torréfaction (8) est mu à rotation dans le sens de la flèche A par un moteur (9) pourvu d'un système à chaînes (10) entraînant des galets (11), lesdits galets appuyant sur le tube de torréfaction (8) et l'entraînant dans son mouvement de rotation. Le tube (8) comporte des chicanes (12) permettant d'une part l'avancement des grains de café et d'autre part la régularisation du trajet desdits grains, donc de la durée de torréfaction. On a disposé au-dessus du tube (8), quatre sources micro-ondes (13).

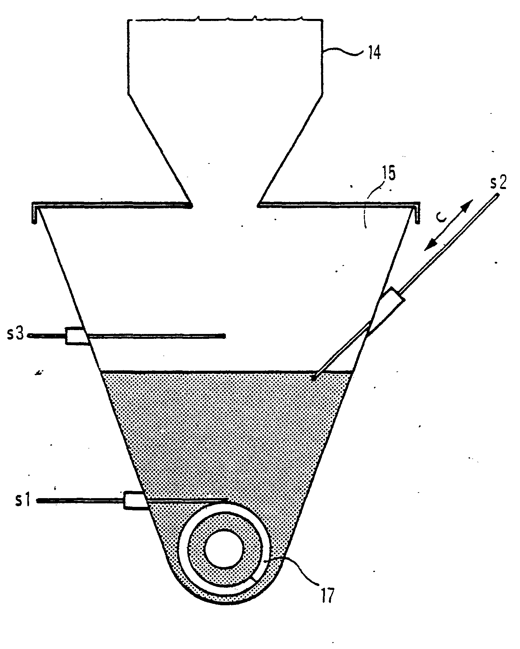

Le système de rétention (4) comporte la cage de canalisation (14) ainsi que la trémie de rétention (15) proprement dite. En référence à la Fig. 2, la trémie de rétention comporte une sonde de température de torréfaction $S_1$, une sonde de niveau $S_2$ et une sonde de sécurité $S_3$. Le moteur (16) transfère les grains de café par la vis hélicoïdale (17) vers le système à refroidissement brusque (5) qui comporte une arrivée d'eau (18) par des ajutages (19). Les grains de café ainsi refroidis passent de la bande transporteuse (20) vers le conditionnement.

La description ci-dessus permet de comprendre le fonctionnement du dispositif selon l'invention. Il y a lieu cependant d'expliciter davantage le processus de rétention des grains de café, en particulier en référence avec la Fig. 2. Le café torréfié quitte le tube de torréfaction (8) et tombe dans la trémie de rétention (15). Compte tenu du degré de torréfaction final désiré, on se donne une durée de rétention. Cette durée permet, connaissant le débit du doseur (15, 16, 17), de déterminer le volume de rétention. La sonde de niveau $S_2$ étant déplaçable dans le sens de la flèche C, on place en conséquence cette sonde de niveau. Le moteur (16) étant relié à $S_1$, $S_2$ et $S_3$, il entraîne la vis helicoïdale (17) de manière à ce que la température indiquée par $S_2$ soit celle indiquée par $S_1$. Si $S_2$ indique une température inférieure à $S_1$, dans ce cas le moteur ralentit son débit, par contre si la sonde de sécurité $S_3$, monte en température, le moteur (16) augmente sa vitesse de manière à ce que le niveau de grains de café baisse. On dispose ainsi d'un moyen très fiable et très flexible de réglage du degré de torréfaction du café.

La seconde possibilité pour pouvoir régler le degré de torréfaction est de disposer d'une balance doseuse supportant la trémie de rétention. Cette balance doseuse permet de connaître avec exactitude la quantité de café retenu dans le trémie à chaque instant. Connaissant la quantité et le débit, on déduit le temps de rétention. Cette solution permet un réglage encore plus précis du degré de torréfaction.

### Exemple comparatif et exemple

De manière à bien montrer l'intérêt du procédé selon la présente invention, on a réalisé dans les mêmes conditions un exemple sans rétention et un exemple avec une durée de 25 secondes de rétention.

On a utilisé du café de Colombie à 10% d'humidité initiale. On a opéré avec un débit de 80 kg/heure, une durée de torréfaction de 100 secondes, une température à l'entrée de la trémie de 220°C, une rotation du tube de torréfaction de 2,5 tours/minute et avec quatre sources micro-ondes de 5 KW chacune.

Les résultats sont indiqués dans le tableau I ci-dessous.

## Tableau I

| | Exemple Comparatif | Exemple avec 25 secondes de rétention |
|---|---|---|
| Humidité (%) | 2,41 | 1,62 |
| Indice d'arôme | 1076 | 1236 |
| Facteur d'équilibre | 1,56 | 2,69 |
| Matière extractible à l'eau (%) | 29,4 | 31 |
| G.N. des grains entiers | 6,04-5,95 | 3,96-3,98 |
| G.N. café moulu | 5,2 | 3,1 |

Le G.N. a été déterminé avec le torréfactomètre, objet du brevet EP 106 135. Pour définir ce G.N., il faut préciser que trois grandeurs sont nécessaires et suffisantes pour définer la couleur. Ce sont dans le système dit "Munsell" les valeurs de la teinte (X), de la brillance (Y) et de la saturation (Z). Le G.N. correspond à la valeur Y obtenue à travers un filtre vert. Elle varie entre 0 (noir absolu) et 100 (blanc pur). Les cafés torréfiés affichent, en règle générale, des valeurs de Y (ou G.N.) comprises entre 2 et 6. Une valeur 2 indique un café très torréfié et une valeur de 6 un café très clair.

Pour obtenir un G.N. égal à celui avec un temps de rétention, il faut torréfier pendant 115 secondes au lieu des 100 secondes avec un temps de rétention.

L'indice d'arôme est défini comme la moyenne arithmétique de l'absorption à 212 et 273 nm d'un distillat de substances volatiles présentes dans l'échantillon, entraînées par la vapeur et condensées dans l'eau. L'indice d'arôme augmente avec la teneur en arôme.

Le facteur d'équilibre est défini comme le rapport de l'absorption à 212 nm par celle à 273 nm. Ce facteur donne une information sur le degré de rôtissage appliqué au café: il augmente lorsque la couleur de ce dernier devient plus foncée.

## Revendications

1. Procédé pour régler le degré de torréfaction notamment du café, dans lequel on soumet ledit café à torréfaction rapide par micro-ondes et à un refroidissement brusque avec de l'eau et de l'air, caractérisé en ce que, entre la torréfaction rapide et le refroidissement brusque, on laisse les grains de café séjourner dans une atmosphère exempte de source d'énergie pendant une durée de rétention déterminée en fonction du degré de torréfaction final désiré.

2. Procédé selon la revendication 1, caractérisé en ce que la durée de rétention est comprise entre 0,1 et 5 minutes.

3. Procédé selon l'une des revendications 1 ou 2, caractérisé en ce que la durée de torréfaction est comprise entre 0,2 et 3 minutes.

4. Procédé selon l'une des revendications 1 à 3, caractérisé en ce que la température de torréfaction est comprise entre 200 et 240°C.

5. Dispositif pour la mise en oeuvre du procédé selon l'une des revendications 1 à 4, comportant un tube cylindrique horizontal (8) logé dans un applicateur micro-ondes (3) et une zone de refroidissement brusque (5) des grains de café, caractérisé en ce qu'il comporte au bout du tube cylindrique horizontal (8) une trémie de réception et de rétention (15) des grains de café avec un système de régulation de débit vers la zone de refroidissement brusque (5) et un moyen pour régler et contrôler le temps de rétention des grains de café torréfiés, ledit moyen étant relié au système de régulation de débit.

6. Dispositif selon la revendication 5, caractérisé en ce que le tube cylindrique horizontal (8) est à rotation autour de son axe et l'applicateur micro-ondes (3) comporte au moins une source micro-ondes (13), de préférence entre 2 et 4.

7. Dispositif selon l'une des revendications 5 ou 6, caractérisé en ce que le moyen pour régler et contrôler le temps de rétention est constitué par une sonde de température ($S_1$) de café torréfié et une sonde de niveau ($S_2$), lesdites sondes étant disposées à différents niveaux dans la trémie de rétention (15).

8. Dispositif selon l'une des revendications 5 ou 6, caractérisé en ce que le moyen pour régler et contrôler le temps de rétention est constitué par une balance doseuse, supportant la trémie de rétention (15).

9. Dispositif selon l'une des revendications 5 à 8, caractérisé en ce que le système de régulation de débit est constitué par un moteur (16) entrainant une vis helicoïdale (17).

## Patentansprüche

1. Verfahren zum Regeln des Röstgrades, insbesondere von Kaffee, bei welchem man den Kaffee einer raschen Röstung durch Mikrowellen und einer schroffen Abkühlung mittels Wasser und Luft unterzieht, dadurch gekennzeichnet, daß man die Kaffeekörner zwischen der raschen Röstung und der schroffen Abkühlung in einer Atmosphäre verweilen läßt, die von der Energiequelle frei ist, während einer Verweildauer, die in Abhängigkeit vom erwünschten endgültigen Röstgrad bestimmt wird.

2. Verfahren nach Anspruch 1, dadurch gekennzeichnet, daß die Verweildauer zwischen 0,1 und 5 min beträgt.

3. Verfahren nach Anspruch 1 oder 2, dadurch gekennzeichnet, daß die Röstdauer zwischen 0,2 und 3 min beträgt.

4. Verfahren nach einem der Ansprüche 1 bis 3, dadurch gekennzeichnet, daß die Rösttemperatur zwischen 200 und 240°C beträgt.

5. Vorrichtung zur Durchführung des Verfahrens nach einem der Ansprüche 1 bis 4, mit einem horizontalen zylindrischen Rohr (8), das in einem Mikrowellengeber (3) angeordnet ist, und einer Zone (5) zum schroffen Abkühlen von Kaffeekörnern, dadurch gekennzeichnet, daß sie am Ende des zylindrischen horizontalen Rohres (8) einen zur Aufnahme und zum Halten der Kaffeekörner bestimmten Trichter (15) mit einem System zum Regeln der Abgabe zur Zone (5) schroffer Abkühlung und ein Mittel zum Regeln und Steuern der Verweilzeiten der gerösteten Kaffeekörner aufweist, wobei dieses Mittel mit dem Abgaberegelsystem verbunden ist.

6. Vorrichtung nach Anspruch 5, dadurch gekennzeichnet, daß das horizontale zylindrische Rohr (8) um seine Achse drehbar ist und der Mikrowellengeber (3) zumindest eine Mikrowellenquelle (13) aufweist, vorzugsweise zwischen 2 und 4.

7. Vorrichtung nach Anspruch 5 oder 6, dadurch gekennzeichnet, daß das Mittel zum Regeln und Steuern der Verweildauer durch eine Temperatursonde ($S_1$) für den gerösteten Kaffee und eine Niveausonde ($S_2$) gebildet ist, wobei die Sonden auf unterschiedlichen Niveaus im Haltetrichter (15) angeordnet sind.

8. Vorrichtung nach Anspruch 5 oder 6, dadurch gekennzeichnet, daß das Mittel zum Regeln und Steuern der Verweilzeit durch eine Dosierwaage gebildet ist, die den Haltetrichter (15) trägt.

9. Vorrichtung nach einem der Ansprüche 5 bis 8, dadurch gekennzeichnet, daß das Abgaberegelsystem durch einen Motor (16) gebildet ist, der eine Schnecke (17) antreibt.

## Claims

1. A process for regulating the degree of roasting, particularly of coffee, in which said coffee is subjected to rapid microwave roasting and to quenching with water and air, characterized in that, between the rapid roasting and quenching steps, the coffee grains are kept in an atmosphere free from any energy source for a retention time determined according to the desired final degree of roasting.

2. A process as claimed in Claim 1, characterized in that the retention time is from 0.1 to 5 minutes.

3. A process as claimed in Claim 1 or 2, characterized in that the roasting time is from 0.2 to 3 minutes.

4. A process as claimed in any of Claims 1 to 3, characterized in that the roasting temperature is from 200 to 240°C.

5. An apparatus for carrying out the process claimed in any of Claims 1 to 4, comprising a horizontal cylindrical tube (8) housed in a microwave applicator (3) and a quenching zone (5) for the coffee grains, characterized in that it comprises at the end of the horizontal cylindrical tube (8) a hopper (15) for receiving and retaining the coffee grains with a system for regulating feed to the quenching zone (5) and means for regulating and controlling the retention time of the roasted coffee grains, said means being connected to the feed regulating system.

6. An apparatus as claimed in Claim 5, characterized in that the horizontal cylindrical tube (8) is mounted for rotation about its axis and the microwave applicator (3) comprises at least one microwave source (13) and preferably from 2 to 4 microwave sources.

7. An apparatus as claimed in Claim 5 or 6, characterized in that the means for regulating and controlling the retention time is in the form of a roasted coffee temperature sensor ($S_1$) and a level sensor ($S_2$), said sensors being located at different levels in the retention hopper (15).

8. An apparatus as claimed in Claim 5 or 6, characterized in that the means for regulating and controlling the retention time is in the form of a metering balance supporting the retention hopper (15).

9. An apparatus as claimed in any of Claims 5 to 8, characterized in that the feed regulating system is in the form of a motor (16) driving a helical screw (17).

Fig.1